(19)

Europäisches
Patentamt
European
Patent Office
Office européen
des brevets

(11)  **EP 2 448 335 B1**

(12)  **EUROPEAN PATENT SPECIFICATION**

(45) Date of publication and mention
of the grant of the patent:
**11.03.2020   Bulletin 2020/11**

(21) Application number: **10818304.7**

(22) Date of filing: **07.06.2010**

(51) Int Cl.:
*H04W 52/04* (2009.01)        *H04B 7/155* (2006.01)
*H04B 7/26* (2006.01)         *H04W 52/14* (2009.01)
*H04W 52/40* (2009.01)

(86) International application number:
**PCT/CN2010/073630**

(87) International publication number:
**WO 2011/035610 (31.03.2011 Gazette 2011/13)**

(54) **METHOD AND SYSTEM FOR TRANSMITTING DOWNLINK DATA VIA A RELAY**

VERFAHREN UND SYSTEM ZUR ÜBERTRAGUNG VON DOWNLINK-DATEN ÜBER EIN RELAIS

PROCÉDÉ ET SYSTÈME DE TRANSMISSION DE DONNÉES DE LIAISON DESCENDANTE VIA UN
RELAIS

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **23.09.2009   CN 200910178101**

(43) Date of publication of application:
**02.05.2012   Bulletin 2012/18**

(73) Proprietor: **ZTE Corporation
Shenzhen, Guangdong 518057 (CN)**

(72) Inventor: **MAO, Lei
Shenzhen
Guangdong 518057 (CN)**

(74) Representative: **Aipex B.V.
P.O. Box 30223
3001 DE Rotterdam (NL)**

(56) References cited:
**WO-A1-2009/110176        CN-A- 101 437 283
CN-A- 101 527 587         CN-A- 101 657 012
US-A1- 2009 053 994**

**Description**

Technical Field

The present invention relates to the field of wireless communications, and in particular, to a method and system for transmitting downlink data via a relay in a Long Term Evolution-Advanced (LTE-A for short) system. The features of the preamble of the independent claims are known from US 2009/0053994 A1.

Background of the Related Art

In 2005, the 3rd Generation Partnership Project (3GPP) started a working group studying the Long Term evolution (LTE), which studied and designed the next generation network of the 3rd generation mobile communication technology evolved 3.9G (advanced 3G).

LTE uses an air interface technology which is different from the 3rd generation mobile communication technology (3G for short). With the Orthogonal Frequency Division Multiplexing (OFDM for short) technology based air interface design, the packet switching based design concept is used in the system, i.e., a shared channel is used, and the physical layer no longer provides a dedicated channel. The system supports two dulplexing modes, i.e., Frequency-Division Duplexing (FDD for short) and Time Division Duplexing (TDD for short). Meanwhile, the architecture of the traditional 3G network is optimized. A flat network structure is used, the access network includes only an evolved node B (eNodeB), and no longer includes a Radio Network Controller (RNC for short).

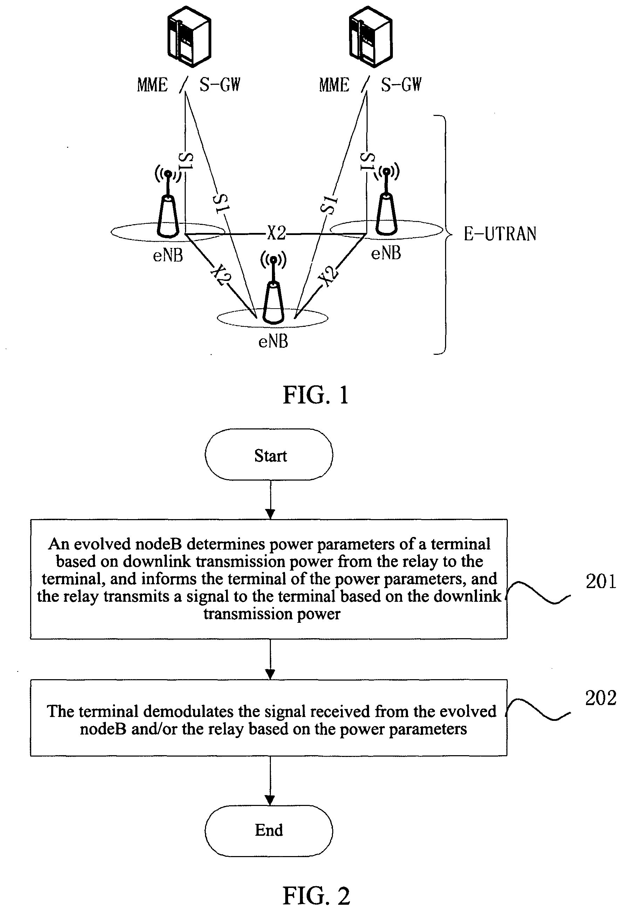

As shown in Fig. 1, the LTE system is comprised of three parts, i.e., an Evolved Packet Core (EPC for short), an Evolved Universal Terrestrial Radio Access Network (E-UTRAN for short) and a User Equipment (UE). The EPC includes Mobility Management Entities (MME for short) which are responsible for signaling processing of the EPC. A data processing entity is called as a Service Gateway (S-GW for short), and the access network includes evolved NodeBs (eNodeB).

Functions of the eNodeB include: radio resource management functions, IP header compression and user data stream encryption, MME selection during attachment of the UE, scheduling transmission of paging information, scheduling transmission of broadcast information, and setting and providing measurements of the eNB, and so on.

Functions of the MME include: paging message transmission, security control, mobility management in an idle state, SAE bearer management, and encryption and integrity protection of non-access layer signaling, and so on.

Functions of the S-GW include: data routing and transmission, and encryption of user plane data.

In the LTE system, the eNodeB is connected to the EPC via a S1 interface, the eNodeBs are connected via an X2 interface and the eNodeB is connected to the UE via a Uu interface.

Compared to the Universal Mobile Telecommunications System (UMTS for short), the Iub interface is not required in the LTE system, as the evolved base station and the RNC are integrated as a network element eNodeB in the LTE system. The X2 interface is similar to the Iur interface, except for a greater simplification, and the S1 interface is similar to the Iu interface, except for a greater simplification.

The Long Term Evolution-Advanced (LTE-A) system is a standard released by the 3GPP in order to meet the requirements of the International Telecommunication Union (ITU for short) on IMT-Advanced (4G). In March 2008, 3GPP passed LTE-Advanced related research projects, which further improves the technology of the LTE system with the goal of meeting and exceeding the technical requirements of the ITU on the IMT-Advanced, and achieves backward compatibility of the LTE. The LTE-Advanced is used as a candidate technology of the IMT-Advanced submitted to the ITU by the 3GPP.

Obviously, the LTE system has become one of primary candidate technologies of the IMT-advanced, since the LTE system stands for the main direction of development of new mobile communication technologies. The LTE itself can be used as the technique basis and core meeting the requirements of the IMT-Advanced, except that compared with the requirements of the IMT-Advanced, the LTE still has a gap in terms of indices. Therefore, when the LTE is upgraded to the 4G, the core of the LTE standard is not required to be changed and only required to be expanded, enhanced and improved on the basis of the LET so as to satisfy the requirements of the IMT-Advanced. The mainly introduced new technologies include enhancement technologies such as relay, Coordinated Multi-Point (CoMP) transmission, Carrier Aggregation (CA), etc.

In order to improve coverage gain at boundaries of a cell and achieve blind compensation effect, a relay technology is introduced in the LTE-Advanced in the 3GPP. An eNodeB not only provides services to the UE of its cell, but also performs data transmission and signaling interaction with a number of relays under its control. Likewise, each relay not only communicates with the eNB, but also provides services to the UE under the relay. The link from the eNB to the relay can use the same frequency resources as those used by the link from the relay to the UE which is served by the relay, which is called an in-band relay, and can use different frequency resources than those used by the link from the relay to the UE which is served by the relay, which is called an out-band relay.

In the discussion of the 3GPP, two types of relays, i.e., Type1 Relay and Type2 Relay, are finally determined based on whether a relay node has independent cell Identifier (ID).

Type1 Relay :

For the UE, the Type1 Relay is an independent cell, has its own physical cell ID, and transmits its own synchronization channel and reference symbol; the Type1 Relay performs scheduling and Hybrid Automatic Repeat reQuest (HARQ for short) functions; and for the R8 UE, the Type1 Relay is a R8 eNB.

Type2 Relay :

The Type2 Relay does not have independent physical cell ID, and does not transmit control information and reference symbol, and the R8 UE cannot see the presence of the Type2 Relay. The Type2 Relay primarily assists the eNB in transmitting and receiving service data.

At present, the process of downlink power control in the LTE system is as follows: the eNB determines transmission power of each Physical Resource Block (PRB for short) in the downlink. The Energy Per Resource Element (EPRE) of a downlink Cell-specific Reference Signal (CRS for short) in the cell is fixed, and is informed to the UE by the eNB through a physical downlink shared channel configuration message carrying Reference-signal-power.

The ratio of EPRE to CRS EPRE of the Physical Downlink Shared Channel (PDSCH) is denoted as $\rho_A$ or $\rho_B$ (an OFDM symbol identifier is determined to be $\rho_A$ or $\rho_B$ according to the following table), where $\rho_A$ and $\rho_B$ are UE specific parameters.

| The number of antenna ports | denoted as $\rho_A$ | | denoted as $\rho_B$ | |
|---|---|---|---|---|
| | Normal CP | Extended CP | Normal CP | Extended CP |
| 1 or 2 | 1, 2, 3, 5, 6 | 1, 2, 4, 5 | 0, 4 | 0, 3 |
| 4 | 2, 3, 5, 6 | 2, 4, 5 | 0, 1, 4 | 0, 1, 3 |

When the modulation mode is 16 Quadrature Amplitude Modulation (QAM) or 64 QAM, a spatial multiplexing, Multiple-Input Multiple-Output (MIMO) transmission mode for more than one layer is as follows:

$$\rho_A = \delta_{\text{power-offset}} + P_A + 10\log_{10}(2) \quad [\text{dB}]$$

In other cases $\rho_A = \delta_{\text{power-offset}} + P_A$ [dB]

Here, $\delta_{\text{power-offset}}$ is 0 dB for the modes except for the multi-user MIMO mode; $P_A$ = EA/ERS is the ratio of transmission power of a data sub-carrier in an OFDM symbol without a pilot to pilot power, and is configured by a higher layer.

$\rho_B / \rho_A$ is configured by the higher layer based on a cell specific parameter $P_B$ according to the following table.

$P_B$ =EB/EA is the ratio of transmission power of a data sub-carrier in an OFDM symbol containing a pilot to transmission power of a data sub-carrier in an OFDM symbol without a pilot.

| $P_B$ | $\rho_B/\rho_A$ | |
|---|---|---|
| | One antenna interface | Two or four antenna interfaces |
| 0 | 1 | 5/4 |
| 1 | 4/5 | 1 |
| 2 | 3/5 | 3/4 |
| 3 | 2/5 | 1/2 |

At present, the influence of addition of a relay node on the LTE system is not considered in the process of downlink power control of the system, and the problem of controlling the transmission power of the relay node is not provided.

Content of the Invention

The technical problem to be solved by the present invention is to provide a method and system for transmitting downlink data via a relay so as to adapt to the characteristics of the relay and enhances the transmission performance of the system. The present invention is defined in the independent claims.

It is provided a system for transmitting downlink data via a relay comprising an evolved NodeB and a relay, wherein the evolved NodeB is configured to determine power parameters of a terminal based on downlink transmission power from the relay to the terminal, and to inform the terminal of the power parameters; and the relay is configured to transmit a signal to the terminal based on the downlink transmission power such that the signal received from the evolved NodeB and/or the relay is demodulated by the terminal based on the power parameters; wherein the power parameters comprise:

a parameter $P_A$ being the ratio of transmission power of a data sub-carrier in an OFDM symbol without a pilot to pilot power, and

a parameter $P_B$ being the ratio of transmission power of a data sub-carrier in an OFDM symbol containing a pilot to transmission power of a data sub-carrier in an OFDM symbol without a pilot.

The system is further characterized in that:
the evolved NodeB is further configured to determine the downlink transmission power from the relay to the terminal, and to inform the relay of the downlink transmission power.

The system is further characterized in that:

the evolved NodeB is further configured to inform the relay of the downlink transmission power from the relay to the terminal after determining the downlink transmission power, and inform the relay of only an offset value of the downlink transmission power when the downlink transmission power is in a form of offset; and

the relay is further configured to use a sum of a fixed value of the downlink transmission power appointed by both parties and the received offset value as the downlink transmission power to the terminal after receiving the offset value of the downlink transmission power transmitted by the evolved NodeB.

The system is further characterized in that:
the relay is further configured to determine the downlink transmission power from the relay to the terminal and inform the evolved NodeB of the downlink transmission power.

The system is further characterized in that:

the evolved NodeB is further configured to use the sum of the fixed value of the downlink transmission power appointed by both parties and the received offset value as the downlink transmission power from the relay to the terminal after receiving the offset value of the downlink transmission power transmitted by the relay; and

the relay is further configured to inform the evolved NodeB of the downlink transmission power from the relay to the terminal after determining the downlink transmission power, and inform the evolved NodeB of only the offset value of the downlink transmission power when the downlink transmission power is in the form of offset.

The system is further characterized in that:
the downlink transmission power from the relay to the terminal is fixed downlink transmission power.

It is provided a method for transmitting downlink data via a relay comprising: determining, by an evolved NodeB, power parameters of a terminal based on downlink transmission power from the relay to the terminal, and informing the terminal of the power parameters; transmitting, by the relay, a signal to the terminal based on the downlink transmission power; and demodulating the signal received from the evolved NodeB and/or the relay based on the power parameters; wherein the power parameters comprise:

a parameter $P_A$ being the ratio of transmission power of a data sub-carrier in an OFDM symbol without a pilot to pilot power, and

a parameter $P_B$ being the ratio of transmission power of a data sub-carrier in an OFDM symbol containing a pilot to transmission power of a data sub-carrier in an OFDM symbol without a pilot.

The method is further characterized in that:
the downlink transmission power from the relay to the terminal is determined and informed to the relay by the evolved NodeB; or the downlink transmission power from the relay to the terminal is determined by the relay itself, and the downlink transmission power is informed to the evolved NodeB by the relay; or the downlink transmission power to the terminal is determined by the relay to be fixed downlink transmission power of a system.

The method is further characterized in that:

the evolved NodeB transmits power configuration parameters containing a terminal identifier to the relay and transmits a resource position of a signal and the downlink transmission power to the terminal, when the downlink transmission power from the relay to the terminal is determined and informed to the relay by the evolved NodeB; or

the relay reports a terminal identifier and the downlink transmission power to the evolved NodeB when the downlink transmission power from the relay to the terminal is determined by the relay itself and the downlink transmission power is informed to the evolved NodeB by the relay.

The method is further characterized in that:

when the evolved NodeB informs the relay of the downlink transmission power from the relay to the terminal after determining the downlink transmission power, the method is specifically that: the evolved NodeB informs the relay of only an offset value of the downlink transmission power when the downlink transmission power is in a form of offset, and uses a sum of a fixed value of the downlink transmission power appointed by both parties and the received offset value as the downlink transmission power to the terminal after the relay receives the offset value; or

when the relay informs the evolved NodeB of the downlink transmission power from the relay to the terminal after determining the downlink transmission power, the method is specifically that: the relay informs the evolved NodeB of only an offset value of the downlink transmission power when the downlink transmission power is in the form of offset, and uses a sum of a fixed value of the downlink transmission power appointed by both parties and the received offset value as the downlink transmission power to the terminal after the evolved NodeB receives the offset value.

In a scene where a relay exists in the LTE-A system, the present invention designs a method suitable to set and transmit transmission power parameters of the relay based on characteristics of the relay so as to adapt to the characteristics of the relay, enhance the transmission performance of the system, and solves the problem of setting the transmission power of the relay node.

Brief Description of Drawings

Fig. 1 is a diagram of a composition structure of a LTE system in the existing technology; and

Fig. 2 is a flow chart of a method for transmitting downlink data via a relay in accordance with an embodiment.

Preferred Embodiments of the Present Invention

As shown in Fig. 2, the method for transmitting downlink data via a relay comprises the following steps.

Step 201: an evolved NodeB determines power parameters of a terminal based on downlink transmission power from the relay to the terminal, and to inform the terminal of the power parameters; and the relay transmits a signal to the terminal based on the downlink transmission power.

Step 202: the signal received from the evolved NodeB and/or the relay is demodulated by the terminal based on the power parameters.

The first embodiment:

The downlink power control in the existing system is determined inside the eNB; if the computation mode of the eNB is still used, the eNB is needed to determine the downlink transmission power from the relay to a certain terminal and inform the relay of the downlink transmission power. The method in accordance with the first embodiment comprises the following steps.

Step 101: the eNB determines the downlink transmission power from the relay to a certain service terminal and transmission power of the eNB.

The eNB determines the downlink transmission power from the relay to the terminal based on parameters of the relay and/or parameters of the terminal. The downlink transmission power may be determined through a plurality of specific algorithms, which will not be described in detail here, or may be determined by manufacturers..

The determined downlink transmission power value is in a form of fixed value when the eNB informs the relay of the downlink transmission power value (the downlink transmission power transmitted by the eNB is an absolute value of the downlink transmission power used by the relay), and the downlink transmission power value received by the relay is used as the downlink transmission power to the terminal. The determined downlink transmission power value may also be in a form of offset, that is, the eNB and the relay appoint the fixed value of the downlink transmission power, and the eNB informs only an offset value of the downlink transmission power, and the sum of the fixed value of the downlink transmission power appointed by both parties and the received offset value is used as the downlink transmission power to the terminal after the relay receives the offset value.

Step 102: the eNB informs the relay of the determined downlink transmission power to the terminal.

The eNB transmits power configuration parameters containing a terminal identifier to the relay and transmits a resource position of a signal and the downlink transmission power to the terminal.

Step 103: the eNB determines the power parameters of the terminal based on the downlink transmission power from the relay to the terminal and informs the terminal of the power parameters.

The power parameters include Pa and Pb; in the practical system, a fixed Pa value may be roughly configured based on different cell types or scenes and be informed to the relay through Un interface signaling configuration. However, Pa is terminal specific (i.e., each terminal is configured individually with a Pa), and Pa needs to be configured for position shifting of the terminal and to be timely informed to the terminal such that the received signal can be demodulated by the terminal and perform CQI measurement on the received signal. In the process, as the relay cannot transmit signaling to the terminal, the eNB is needed to amend the configured Pa parameters in consideration of the influence of the relay when configuring the power parameters in the original signaling. There may be a plurality of the methods for the eNB to determine the power parameters of the terminal based on the downlink transmission power from the relay to the terminal, which will not be described in detail here, or the power parameters of the terminal may be determined by manufacturers.

Step 104: the eNB transmits a signal to the terminal based on the transmission power computed by itself, and the relay transmits a signal to the terminal on resources configured by the eNB based on the downlink transmission power configured by the eNB.

Step 105: the signal received from the eNB and/or the relay is demodulated by the UE based on the downlink transmission power configured by the eNB and performs corresponding measurements.

The second embodiment

The relay independently determines the downlink transmission power from the relay to the terminal, and informs the eNB of the downlink transmission power. The method in accordance with the second embodiment comprises the following steps.

Step 201: the eNB informs the relay to transmit a signal to a certain user.

Step 202: the relay determines the downlink transmission power from the relay to a certain service terminal.

The relay determines the downlink transmission power from the relay to the terminal based on parameters of the relay and/or parameters of the terminal. The downlink transmission power may be determined through a plurality of specific algorithms, which will not be described in detail here, or may be determined by manufacturers.

Step 203: the relay reports the determined downlink transmission power to the eNB; and the relay further reports the terminal identifier while reporting the determined downlink transmission power to the eNB.

When the determined downlink transmission power value reported by the relay is in the form of fixed value (the downlink transmission power transmitted by the relay is an absolute value of the downlink transmission power used by the relay), the received downlink transmission power value is used by the eNB as the downlink transmission power to the terminal. the determined downlink transmission power value may also be in the form of offset, that is, the eNB and the relay appoint the fixed value of the downlink transmission power, and the relay informs only an offset value of the downlink transmission power, and the sum of the fixed value of the downlink transmission power appointed by both parties and the received offset value is used as the downlink transmission power to the terminal after the eNB receives the offset value.

Step 204: the eNB determines the power parameters of the terminal based on the downlink transmission power from the relay to the terminal, and informs the terminal of the power parameters.

The power parameters include Pa and Pb; the eNB amends the configured Pa parameters in consideration of the influence of the relay when configuring the power parameters in the original signaling. There may be a plurality of the methods for the eNB to determine the power parameters of the terminal based on the downlink transmission power from the relay to the terminal, which will not be described in detail here, or the power parameters of the terminal may be determined by manufacturers.

Step 205: the eNB transmits a signal to the terminal based on the transmission power computed by itself, and the relay transmits a signal to the terminal on resources configured the eNB based on the downlink transmission power determined by itself.

Step 206: the signal received from the eNB and/or the relay is demodulated by the UE based on power parameters configured by the eNB and performs corresponding measurements.

The third embodiment

The downlink transmission power from the relay to the terminal may also be fixed transmission power set by the system. The method in accordance with the third embodiment comprises the following steps.

Step 301: the relay determines the fixed transmission power set by the system to be the downlink transmission power to a certain terminal; wherein the fixed transmission power may be pre-configured by an operator, and the eNB acquires the fixed transmission power at the same time.

Step 302: the eNB determines the power parameters of the terminal and informs the terminal of the power parameters.

The eNB determines whether the relay participates in communication with the terminal, and if so, the eNB determines the power parameters of the terminal based on the downlink transmission power from the relay to the terminal, and informs the terminal of the power parameters. The eNB amends the configured Pa parameters in consideration of the influence of the relay when configuring the power parameters in the original signaling. There may be a plurality of the methods for the eNB to determine the power parameters of the terminal based on the downlink transmission power from the relay to the terminal, which will not be described in detail here, or the power parameters of the terminal may be determined by manufacturers.

Step 303: the eNB transmits a signal to the terminal based on the transmission power computed by itself, and the relay transmits a signal to the terminal on resources configured by the eNB based on the fixed downlink transmission power.

Step 304: the signal received from the eNB and/or the relay is demodulated by the UE based on power parameters configured by the eNB and performs corresponding measurements.

In a scene where a relay exists in the LTE-A system, the present invention provides a new solution for transmission of downlink data via a relay, and considering the case where the relay transmits downlink data to the terminal, the eNB side amends the power parameters of the terminal, and adjusts the power parameters of the terminal so as to adapt to the characteristics of the relay, enhance the transmission performance of the system, and solve the problem of setting the transmission power of the relay node.

The above description is only the preferred embodiments of the present invention and is not intended to limit the present invention. Various modifications and variations to the present invention may be made by those skilled in the art. Any modification, equivalent substitution and improvement made within the principle of the present invention as defined in the claims should be covered within the protection scope of the present invention.

Industrial Applicability

In a scene where a relay exists in the LTE-A system, the present invention designs a method suitable to set and transmit transmission power parameters of the relay based on characteristics of the relay so as to adapt to the characteristics of the relay, enhance the transmission performance of the system, and solves the problem of setting the transmission power of the relay node.

## Claims

1. A system for transmitting downlink data via a relay comprising an evolved NodeB and the relay, wherein the evolved NodeB is configured to determine power parameters of a terminal based on downlink transmission power from the relay to the terminal, and to inform the terminal of the power parameters; and
the relay is configured to transmit a signal to the terminal based on the downlink transmission power such that the signal received from the evolved NodeB and/or the relay is demodulated by the terminal based on the power parameters;
**characterized in that** the power parameters comprise:

a parameter $P_A$ being the ratio of transmission power of a data sub-carrier in an OFDM symbol without a pilot to pilot power, and
a parameter $P_B$ being the ratio of transmission power of a data sub-carrier in an OFDM symbol containing a pilot to transmission power of a data sub-carrier in an OFDM symbol without a pilot.

**2.** The system according to claim 1, wherein
the evolved NodeB is further configured to determine the downlink transmission power from the relay to the terminal, and to inform the relay of the downlink transmission power.

**3.** The system according to claim 2, wherein
the evolved NodeB is further configured to inform the relay of the downlink transmission power from the relay to the terminal after determining the downlink transmission power, and inform the relay of only an offset value of the downlink transmission power when the downlink transmission power is in a form of offset; and
the relay is further configured to use a sum of a fixed value of the downlink transmission power appointed by both parties and the received offset value as the downlink transmission power to the terminal after receiving the offset value of the downlink transmission power transmitted by the evolved NodeB.

**4.** The system according to claim 1, wherein
the relay is further configured to determine the downlink transmission power from the relay to the terminal and inform the evolved NodeB of the downlink transmission power.

**5.** The system according to claim 4, wherein
the evolved NodeB is further configured to use the sum of the fixed value of the downlink transmission power appointed by both parties and the received offset value as the downlink transmission power from the relay to the terminal after receiving the offset value of the downlink transmission power transmitted by the relay; and
the relay is further configured to inform the evolved NodeB of the downlink transmission power from the relay to the terminal after determining the downlink transmission power, and inform the evolved NodeB of only the offset value of the downlink transmission power when the downlink transmission power is in the form of offset.

**6.** The system according to claim 1, wherein
the downlink transmission power from the relay to the terminal is fixed downlink transmission power.

**7.** A method for transmitting downlink data via a relay, comprising:

determining (201), by an evolved NodeB, power parameters of a terminal based on downlink transmission power from the relay to the terminal, and informing the terminal of the power parameters;
transmitting (201), by the relay, a signal to the terminal based on the downlink transmission power; and
demodulating (202) the signal received from the evolved NodeB and/or the relay based on the power parameters;
**characterized in that** the power parameters comprise:

a parameter $P_A$ being the ratio of transmission power of a data sub-carrier in an OFDM symbol without a pilot to pilot power, and
a parameter $P_B$ being the ratio of transmission power of a data sub-carrier in an OFDM symbol containing a pilot to transmission power of a data sub-carrier in an OFDM symbol without a pilot.

**8.** The method according to claim 7, wherein
the downlink transmission power from the relay to the terminal is determined and informed to the relay by the evolved NodeB; or
the downlink transmission power from the relay to the terminal is determined by the relay itself, and the downlink transmission power is informed to the evolved NodeB by the relay; or
the downlink transmission power to the terminal is determined by the relay to be fixed downlink transmission power of a system.

**9.** The method according to claim 8, wherein
the evolved NodeB transmits power configuration parameters containing a terminal identifier to the relay and transmits a resource position of a signal and the downlink transmission power to the terminal, when the downlink transmission power from the relay to the terminal is determined and informed to the relay by the evolved NodeB; or
the relay reports a terminal identifier and the downlink transmission power to the evolved NodeB when the downlink transmission power from the relay to the terminal is determined by the relay itself and the downlink transmission power is informed to the evolved NodeB by the relay.

**10.** The method according to claim 8, wherein
when the evolved NodeB informs the relay of the downlink transmission power from the relay to the terminal after determining the downlink transmission power, the method is specifically that: the evolved NodeB informs the relay of only an offset value of the downlink transmission power when the downlink transmission power is in a form of offset, and uses a sum of a fixed value of the downlink transmission power appointed by both parties and the received offset value as the downlink transmission power to the terminal after the relay receives the offset value; or when the relay informs the evolved NodeB of the downlink transmission power from the relay to the terminal after determining the downlink transmission power, the method is specifically that: the relay informs the evolved NodeB of only an offset value of the downlink transmission power when the downlink transmission power is in the form of offset, and uses a sum of a fixed value of the downlink transmission power appointed by both parties and the received offset value as the downlink transmission power to the terminal after the evolved NodeB receives the offset value.

## Patentansprüche

1.  System zur Übertragung von Downlink-Daten über ein Relais, das eine Evolved NodeB und das Relais umfasst, wobei die Evolved NodeB dazu konfiguriert ist, Leistungsparameter eines Endgeräts auf Grundlage der Downlink-Übertragungsleistung von dem Relais zu dem Endgerät zu bestimmen und das Endgerät über die Leistungsparameter zu benachrichtigen; und

    das Relais dazu konfiguriert ist, ein Signal an das Endgerät auf Grundlage der Downlink-Übertragungsleistung zu übertragen, sodass das von der Evolved NodeB und/oder dem Relais empfangene Signal auf Grundlage der Leistungsparameter von dem Endgerät demoduliert ist;

    **dadurch gekennzeichnet, dass** die Leistungsparameter Folgendes umfassen:

    einen Parameter $P_A$ als Verhältnis der Übertragungsleistung eines Daten-Unterträgers in einem OFDM-Symbol ohne Pilot zur Pilotleistung, und

    einen Parameter $P_B$ als Verhältnis der Übertragungsleistung eines Daten-Unterträgers in einem OFDM-Symbol, das einen Piloten enthält, zur Übertragungsleistung eines Daten-Unterträgers in einem OFDM-Symbol ohne Pilot.

2.  System nach Anspruch 1, wobei

    die Evolved NodeB ferner dazu konfiguriert ist, die Downlink-Übertragungsleistung von dem Relais zu dem Endgerät zu bestimmen und das Relais über die Downlink-Übertragungsleistung zu benachrichtigen.

3.  System nach Anspruch 2, wobei

    die Evolved NodeB ferner dazu konfiguriert ist, das Relais nach dem Bestimmen der Downlink-Übertragungsleistung über die Downlink-Übertragungsleistung von dem Relais zu dem Endgerät zu benachrichtigen und das Relais nur über einen Versatzwert der Downlink-Übertragungsleistung zu benachrichtigen, wenn sich die Downlink-Übertragungsleistung in einer Form des Versatzes befindet; und

    das Relais ferner dazu konfiguriert ist, eine Summe eines festgelegten Wertes der Downlink-Übertragungsleistung, die durch beide Seiten benannt wurde, und des empfangenen Versatzwertes als die Downlink-Übertragungsleistung an das Endgerät nach Empfangen des Versatzwertes der Downlink-Übertragungsleistung, die von der Evolved NodeB übertragen wurde, zu nutzen.

4.  System nach Anspruch 1, wobei

    das Relais ferner dazu konfiguriert ist, die Downlink-Übertragungsleistung von dem Relais an das Endgerät zu bestimmen und die Evolved NodeB über die Downlink-Übertragungsleistung zu benachrichtigen.

5.  System nach Anspruch 4, wobei

    die Evolved NodeB ferner dazu konfiguriert ist, die Summe des festgelegten Wertes der Downlink-Übertragungsleistung, die durch beide Seiten benannt wurde, und des empfangenen Versatzwertes als die Downlink-Übertragungsleistung von dem Relais an das Endgerät nach Empfangen des Versatzwertes der Downlink-Übertragungsleistung, die von dem Relais übertragen wurde, zu nutzen; und

    das Relais ferner dazu konfiguriert ist, die Evolved NodeB nach dem Bestimmen der Downlink-Übertragungsleistung über die Downlink-Übertragungsleistung von dem Relais zu dem Endgerät zu benachrichtigen und die Evolved NodeB nur über den Versatzwert der Downlink-Übertragungsleistung zu benachrichtigen, wenn sich die Downlink-Übertragungsleistung in der Form des Versatzes befindet.

6.  System nach Anspruch 1, wobei

    die Downlink-Übertragungsleistung von dem Relais zu dem Endgerät eine festgelegte Downlink-Übertragungsleistung ist.

7. Verfahren zur Übertragung von Downlink-Daten über ein Relais, das Folgendes umfasst:

Bestimmen (201) von Leistungsparametern eines Endgeräts durch eine Evolved NodeB auf Grundlage einer Downlink-Übertragungsleistung von dem Relais zu dem Endgerät und Benachrichtigen des Endgeräts über die Leistungsparameter;
Übertragen (201) eines Signals an das Endgerät durch das Relais auf Grundlage der Downlink-Übertragungsleistung; und
Demodulieren (202) des von der Evolved NodeB und/oder dem Relais empfangenen Signals auf Grundlage der Leistungsparameter;
**dadurch gekennzeichnet, dass** die Leistungsparameter Folgendes umfassen:

einen Parameter $P_A$ als Verhältnis der Übertragungsleistung eines Daten-Unterträgers in einem OFDM-Symbol ohne Pilot zur Pilotleistung, und
einen Parameter $P_B$ als Verhältnis der Übertragungsleistung eines Daten-Unterträgers in einem OFDM-Symbol, das einen Piloten enthält, zur Übertragungsleistung eines Daten-Unterträgers in einem OFDM-Symbol ohne Pilot.

8. Verfahren nach Anspruch 7, wobei
die Downlink-Übertragungsleistung von dem Relais zu dem Endgerät durch die Evolved NodeB bestimmt und als Information an das Relais weitergegeben wird; oder
die Downlink-Übertragungsleistung von dem Relais zu dem Endgerät von dem Relais selbst bestimmt wird und die Evolved NodeB von dem Relais über die Downlink-Übertragungsleistung benachrichtigt wird; oder
die Downlink-Übertragungsleistung an das Endgerät von dem Relais als festgelegte Downlink-Übertragungsleistung eines Systems bestimmt wird.

9. Verfahren nach Anspruch 8, wobei
die Evolved NodeB Leistungskonfigurationsparameter an das Relais überträgt, die eine Endgeräteerkennung enthalten, und eine Quellenposition eines Signals und die Downlink-Übertragungsleistung an das Terminal überträgt, wenn die Downlink-Übertragungsleistung von dem Relais zu dem Endgerät von der Evolved NodeB bestimmt und als Information an das Relais weitergeben wird; oder
das Relais eine Endgeräteerkennung und die Downlink-Übertragungsleistung an die Evolved NodeB meldet, wenn die Downlink-Übertragungsleistung von dem Relais an das Endgerät von dem Relais selbst bestimmt wird und die Downlink-Übertragungsleistung von dem Relais als Information an die Evolved NodeB weitergegeben wird.

10. Verfahren nach Anspruch 8, wobei
beim Benachrichtigen des Relais durch die Evolved NodeB über die Downlink-Übertragungsleistung von dem Relais zu dem Endgerät nach Bestimmen der Downlink-Übertragungsleistung das Verfahren insbesondere Folgendes ist:
die Evolved NodeB benachrichtigt das Relais nur über einen Versatzwert der Downlink-Übertragungsleistung, wenn sich die Downlink-Übertragungsleistung in einer Form des Versatzes befindet und nutzt eine durch beide Seiten benannte Summe eines festgelegten Wertes der Downlink-Übertragungsleistung und den empfangenen Versatzwert als die Downlink-Übertragungsleistung an das Endgerät, nachdem das Relais den Versatzwert erhalten hat; oder
beim Benachrichtigen der Evolved NodeB durch das Relais über die Downlink-Übertragungsleistung von dem Relais zum Endgerät nach Bestimmen der Downlink-Übertragungsleistung das Verfahren insbesondere Folgendes ist: das Relais benachrichtigt die Evolved NodeB nur über einen Versatzwert der Downlink-Übertragungsleistung, wenn sich die Downlink-Übertragungsleistung in der Form des Versatzes befindet und nutzt eine durch beide Seiten benannte Summe eines festgelegten Wertes der Downlink-Übertragungsleistung und den empfangenen Versatzwert als die Downlink-Übertragungsleistung an das Endgerät, nachdem die Evolved NodeB den Versatzwert erhalten hat.

**Revendications**

1. Système de transmission de données de liaison descendante via un relais comprenant un nœud B évolué et le relais, dans lequel
le nœud B évolué est configuré pour déterminer les paramètres de puissance d'un terminal sur la base de la puissance de transmission de liaison descendante du relais au terminal, et pour informer le terminal des paramètres de puissance ; et

le relais est configuré pour transmettre un signal au terminal sur la base de la puissance de transmission de liaison descendante de sorte que le signal reçu depuis le nœud B évolué et/ou le relais est démodulé par le terminal sur la base des paramètres de puissance ;
**caractérisé en ce que** les paramètres de puissance comprennent :

un paramètre $P_A$ étant le rapport d'une puissance de transmission d'une sous-porteuse de données dans un symbole OFDM sans pilote à une puissance pilote, et
un paramètre $P_B$ étant le rapport d'une puissance de transmission d'une sous-porteuse de données dans un symbole OFDM contenant un pilote à une puissance de transmission d'une sous-porteuse de données dans un symbole OFDM sans pilote.

2. Système selon la revendication 1, dans lequel le nœud B évolué est en outre configuré pour déterminer la puissance de transmission de liaison descendante du relais au terminal, et pour informer le relais de la puissance de transmission de liaison descendante.

3. Système selon la revendication 2, dans lequel le nœud B évolué est en outre configuré pour informer le relais de la puissance de transmission de liaison descendante du relais au terminal après avoir déterminé la puissance de transmission de liaison descendante, et informer le relais uniquement d'une valeur de décalage de la puissance de transmission de liaison descendante lorsque la puissance de transmission de liaison descendante est sous la forme d'un décalage ; et
le relais est en outre configuré pour utiliser une somme d'une valeur fixe de la puissance de transmission de liaison descendante désignée par les deux parties et de la valeur de décalage reçue en tant que puissance de transmission de liaison descendante au terminal après avoir reçu la valeur de décalage de la puissance de transmission de liaison descendante transmise par le nœud B évolué.

4. Système selon la revendication 1, dans lequel
le relais est en outre configuré pour déterminer la puissance de transmission de liaison descendante du relais au terminal et informer le nœud B évolué de la puissance de transmission de liaison descendante.

5. Système selon la revendication 4, dans lequel
le nœud B évolué est en outre configuré pour utiliser la somme de la valeur fixe de la puissance de transmission de liaison descendante désignée par les deux parties et de la valeur de décalage reçue en tant que puissance de transmission de liaison descendante du relais au terminal après avoir reçu la valeur de décalage de la puissance de transmission de liaison descendante transmise par le relais ; et
le relais est en outre configuré pour informer le nœud B évolué de la puissance de transmission de liaison descendante du relais au terminal après avoir déterminé la puissance de transmission de liaison descendante, et informer le nœud B évolué uniquement d'une valeur de décalage de la puissance de transmission de liaison descendante lorsque la puissance de transmission de liaison descendante est sous la forme d'un décalage.

6. Système selon la revendication 1, dans lequel
la puissance de transmission de liaison descendante du relais au terminal est une puissance de transmission de liaison descendante fixe.

7. Procédé de transmission de données de liaison descendante via un relais, comprenant : la détermination (201), par un nœud B évolué, de paramètres de puissance d'un terminal sur la base de la puissance de transmission de liaison descendante du relais au terminal, et la notification au terminal des paramètres de puissance ;
la transmission (201), par le relais, d'un signal au terminal sur la base de la puissance de transmission de liaison descendante ; et
la démodulation (202) du signal reçu depuis le nœud B évolué et/ou le relais sur la base des paramètres de puissance ; **caractérisé en ce que** les paramètres de puissance comprennent :

un paramètre $P_A$ étant le rapport d'une puissance de transmission d'une sous-porteuse de données dans un symbole OFDM sans pilote à une puissance pilote, et
un paramètre $P_B$ étant le rapport d'une puissance de transmission d'une sous-porteuse de données dans un symbole OFDM contenant un pilote à une puissance de transmission d'une sous-porteuse de données dans un symbole OFDM sans pilote.

8. Procédé selon la revendication 7, dans lequel

la puissance de transmission de liaison descendante du relais au terminal est déterminée et notifiée au relais par le nœud B évolué ; ou

la puissance de transmission de liaison descendante du relais au terminal est déterminée par le relais lui-même, et la puissance de transmission de liaison descendante est notifiée au nœud B évolué par le relais ; ou

la puissance de transmission de liaison descendante au terminal est déterminée par le relais comme étant une puissance de transmission de liaison descendante fixe d'un système.

**9.** Procédé selon la revendication 8, dans lequel

le nœud B évolué transmet les paramètres de configuration de puissance contenant un identifiant de terminal au relais et transmet une position de ressource d'un signal et la puissance de transmission de liaison descendante au terminal, dans lequel la puissance de transmission de liaison descendante du relais au terminal est déterminée et notifiée au relais par le nœud B évolué ; ou

le relais signale un identifiant de terminal et la puissance de transmission de liaison descendante au nœud B évolué lorsque la puissance de transmission de liaison descendante du relais au terminal est déterminée par le relais lui-même et la puissance de transmission de liaison descendante est notifiée au nœud B évolué par le relais.

**10.** Procédé selon la revendication 8, dans lequel

lorsque le nœud B évolué informe le relais de la puissance de transmission de liaison descendante du relais au terminal après avoir déterminé la puissance de transmission de liaison descendante, le procédé consiste de manière spécifique en ce que : le nœud B évolué informe le relais uniquement d'une valeur de décalage de la puissance de transmission de liaison descendante lorsque la puissance de transmission de liaison descendante est sous la forme d'un décalage, et utilise une somme d'une valeur fixe de la puissance de transmission de liaison descendante désignée par les deux parties et de la valeur de décalage reçue en tant que puissance de transmission de liaison descendante au terminal après que le relais reçoit la valeur de décalage ; ou

lorsque le relais informe le nœud B évolué de la puissance de transmission de liaison descendante du relais au terminal après avoir déterminé la puissance de transmission de liaison descendante, le procédé consiste de manière spécifique en ce que : le relais informe le nœud B évolué uniquement d'une valeur de décalage de la puissance de transmission de liaison descendante lorsque la puissance de transmission de liaison descendante est sous la forme d'un décalage, et utilise une somme d'une valeur fixe de la puissance de transmission de liaison descendante désignée par les deux parties et de la valeur de décalage reçue en tant que puissance de transmission de liaison descendante au terminal après que le nœud B évolué reçoit la valeur de décalage.

FIG. 1

An evolved nodeB determines power parameters of a terminal based on downlink transmission power from the relay to the terminal, and informs the terminal of the power parameters, and the relay transmits a signal to the terminal based on the downlink transmission power — 201

The terminal demodulates the signal received from the evolved nodeB and/or the relay based on the power parameters — 202

FIG. 2

**EP 2 448 335 B1**

## REFERENCES CITED IN THE DESCRIPTION

### Patent documents cited in the description

- US 20090053994 A1